# EUROPEAN PATENT SPECIFICATION

(11) **EP 3 158 559 B1**
(45) Date of publication and mention of the grant of the patent: **23.05.2018**
(21) Application number: 15736702.0
(22) Date of filing: 17.06.2015
(51) Int. Cl.: G10L 15/06, G06F 17/30, G10L 15/183, G10L 15/22

(54) **SESSION CONTEXT MODELING FOR CONVERSATIONAL UNDERSTANDING SYSTEMS**
SITZUNGSKONTEXTMODELLIERUNG FÜR KONVERSATIONSVERSTÄNDNISSYSTEME
MODÉLISATION DE CONTEXTE DE SESSION POUR DES SYSTÈMES DE COMPRÉHENSION CONVERSATIONNELLE

(30) Priority: 18.06.2014 US 201414308174
(43) Date of publication of application: 26.04.2017
(73) Proprietor: Microsoft Technology Licensing, LLC, Redmond, WA 98052-6399 (US)
(72) Inventor: AKBACAK, Murat, Redmond, Washington 98052-6399 (US); HAKKANI-TUR, Dilek Z., Redmond, Washington 98052-6399 (US); TUR, Gokhan, Redmond, Washington 98052-6399 (US); HECK, Larry P., Redmond, Washington 98052-6399 (US)
(74) Representative: Goddar, Heinz J.
(86) International application number: PCT/US2015/036116
(87) International publication number: WO 2015/195729

(56) References cited:
- US-A1- 2009 030 687
- US-A1- 2013 152 092

## Description

### BACKGROUND

Voice-enabled human-machine conversational systems, such as voice interaction with entertainment systems or personal devices, depend on accurate recognition of a user's speech. For example, effective voice search applications must accurately recognize user-submitted queries or other interactions so that information returned to the user correlates with the user's intent in submitting the query or action. Within a series of interactions or "turns" with one of these systems, a user might submit several queries. Typically, the content of those queries changes at a word level or lexical from one turn to the next, but it often shares some relatedness at a semantic or intent level, within the same session. For example, a user may ask about movie and then want to know of nearby locations of a theatre where the movie is playing.

This scenario is particularly common in structured domains, such as entertainment systems or personal assistant applications, where users may specify several pieces of information for task completion. (For example, for the task of making a flight reservation, this might include specifying departure and arrival locations, flight date, preferred time, preferred airline, etc.) But even when the user's targeted intent changes from one turn to the next, there still may be some relatedness or correlation between consecutive queries; for example, reserving a rental car or looking up a hotel after buying flight tickets.

By incorporating this user-session context information into the language models used by conversational systems for speech recognition, the accuracy of the systems can be improved by providing better target and predictive modeling. However, capturing this information at a semantic level with limited past data (e.g. past queries in a specific session up the present time) is challenging. Moreover, existing efforts to model session context consider only past queries in a current session and assume the entire session is directed to only one specific topic or intent. Further, these approaches do not model sequential actions taken by a user within each session. As an example, the patent document US 2013/0152092 A1 proposes to produce a "language model" based on prior context information comprising user intentions to be traversed when interpreting a user input.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Embodiments of the invention are directed to systems and methods for improving language models and spoken language understanding (SLU) models for speech recognition by adapting knowledge sources utilized by the models to session contexts. In particular, a knowledge source, such as a knowledge graph, may be used to capture and model dynamic session context based on user interaction information from usage history, such as session logs, that is mapped to the knowledge source. As will be further described, in one embodiment, a knowledge source is adapted to a session context for a user by incorporating user-interaction information from the usage history of the user or other similar users. For example, information from user interactions or "turns" with an application or device may be mapped to the knowledge source. Based on sequences of the mapped user interactions, an intent sequence model is determined. The intent sequence model then may be used to build or adapt language models and SLU models based on session context, including real time generation and interpolation of the models, thereby functioning as session context models. In this way, the model may be used for determining a set of likely next turns, given a previous turn or turns. Language model(s) for the set of likely next turns then may be accessed or generated to facilitate accurate recognition of the next turn.

Some embodiments include adapting the knowledge source to model session context globally for all users or for only a specific group of users. For example, the usage history information incorporated into the knowledge source(s) may be tailored to users with similar interests or intents, based on users' social networking data, user logs, or other user information. In this way, session context models may be built based on the population characteristics in common to the similar Aspects of the present invention are defined as in appended claims 1, 5 and 6.

### BRIEF DESCRIPTION OF THE DRAWINGS

The present invention is illustrated by way of example and not limitation in the accompanying figures in which like reference numerals indicate similar elements and in which:
FIG. 1 is a block diagram of an example system architecture in which an embodiment of the invention may be employed;
FIG. 2 depicts portions of one example of a personalized knowledge graph, in accordance with an embodiment of the invention;
FIG. 3 depicts an illustrative representation of one aspect of a session context model, in accordance with an embodiment of the invention;
FIGS. 4-6 depict flow diagrams of methods for adapting a language model to a session context based on user history to better understand future interactions, in accordance with embodiments of the present invention;
FIGS. 7-8 depict flow diagrams of methods for providing a session context model based on user history information, in accordance with embodiments of the present invention;
FIG. 9 depicts a flow diagrams of a method for using a knowledge source personalized with session context information to provide a language model, in accordance with embodiments of the present invention; and
FIG. 10 is a block diagram of an exemplary computing environment suitable for use in implementing embodiments of the present invention.

### DETAILED DESCRIPTION

The subject matter of the present invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Aspects of the technology described herein are generally directed to systems, methods, and computer storage media for, among other things, improving language models for speech recognition by adapting knowledge sources utilized by the language models to session contexts. In particular, a knowledge source, such as a knowledge graph, may be used to capture and model dynamic session context based on user interaction information from usage history, such as session logs, that is mapped to the knowledge source. The knowledge source may be adapted for a session context for a user by mapping or aligning user-interaction information, from personal usage history of the user or similar users, to the knowledge source, thereby personalizing the knowledge source to the user or set of users. From the mappings, user intent corresponding to each interaction may be determined based on probable entity types and related information from areas surrounding the mapping. Based on sequences or patterns from the mapped user-interaction information, higher level intent sequences may be determined and used to form models that anticipate similar intents but with different arguments, including arguments that do not necessarily appear in the usage history. In one embodiment, the model includes a set of transition probabilities indicating a likelihood of transitioning from a first interaction to a second interaction.

The session context model may be utilized to determine information about a likely future interaction with the user, such as a user-submitted query or other user interaction, based on previous user interaction information. Based on the likely future interaction information, a language model or SLU model may be generated or adapted to improve speech recognition and understanding associated with the next interaction.

By way of example, in an embodiment, user-interaction information, such as information from a user query log, is mapped to semantic relationships of a knowledge source, such as a knowledge graph. The user-interaction information may comprise sequences (or patterns) of user-interaction events from one or more sessions between a user and an application or device. From the mapping, a likely user intent associated with each mapped user-interaction event can be determined based on the semantic relationships (such as one or more entities, entity type(s), or relationship(s)) and/or other information in the knowledge source corresponding to the mapped interaction event. Based on the mapping and the sequence (or patterns) of user-interaction events within sessions of the user-interaction-related information, a sequence (or pattern) of likely user intents may be determined and used for an intent sequence model. In an embodiment, the intent sequence model includes statistics for intent transitions in the intent sequence (or pattern), such as a set of intent-transition probabilities, which represent the likelihood of subsequent user intents given one or more preceding intents. The intent sequence model can be used to build or adapt language models and SLU models based on a session context, including real time generation and interpolation of the language and SLU models, thereby forming a session context model. In this way, the session context model may be used for determining a set of likely next turns, given a previous turn or turns. Language model(s) for the set of likely next turns then may be accessed or generated to facilitate accurate recognition of the next turn.

For example, in a first turn, a user asks her personal device "Who is the director of *Life is Beautiful?"* This query may be mapped to a portion of a knowledge source corresponding to a movie-director semantic relationship (e.g., *Life is Beautiful -* directed by - Robert Benigni). From a session context model based on the knowledge source, which has been populated with previous personal usage history information, it may be determined that following a director-movie type of query, there is a 0.4 probability that in the next turn the user will ask about the movie cast, 0.2 probability that the user will next ask about Oscars or awards, and a 0.1 probability that the user will next ask about the nationality of the director. Based on these transition probabilities, language models corresponding to the transitions (e.g., the cast of *Life is Beautiful,* its awards, or the director's nationality) may be interpolated to better recognize or understand the next turn. With each subsequent turn, the session context model uses the domain and intents from previous turn(s) to predict the likelihood of next turns so that language models and SLU models may be adapted to the prediction.

Embodiments of the invention may be considered to "personalize" a knowledge source by mapping or aligning personal usage history including user-interaction information to a more general knowledge source. User interaction information may include by way of example and without limitation, one or more user queries, utterances including spoken queries, other multimodal or contextual data, such as user utterances at certain points in time within a session, user actions or what is displayed to a user within a session, and other user-interaction-related information. As described above, user-interaction information may come from personal usage history, which may include, by way of example and without limitation, a user's web query logs, desktop or personal device query logs, social networking interactions, websites visited, or similar user-interaction information. Accordingly, in an embodiment, personal usage history is mapped to a generic or less personalized knowledge source to personalize it, and from this, intent sequences are determined. In another embodiment, a subset or portions of personal usage history, including user-interaction information, are mapped to the generic (or less personalized) knowledge source to personalize it based on the user-interaction related information. From the personalized knowledge source, intent sequences are determined for an intent sequences model.

Further, various personal sources of information for a user and more generalized (less personalized) knowledge sources, such as domain databases and knowledge graphs, may be utilized when creating the personalized knowledge source. In some embodiments, the personalized knowledge sources then may be used as personalized language models, such as by training a language model with queries corresponding to entities or entity pairs that appear in the user's usage history information. The personalized knowledge sources also may be used to determine intent sequence models by determining sequences (or patterns) of entities and entity pairs corresponding to sequences or patterns of user-interaction information from the usage history information. Probabilities associated with intent transitions in the intent sequences model then may be used to adjust the weighting of the personalized language models, thereby creating a session context model.

Some embodiments further include adapting a knowledge source to model session context globally for all users or for only a specific group of users. For example, personalized knowledge sources may be used to identify users with similar interests or intents, such as by clustering. In this way, the session context models may be built based on the population characteristics in common to the similar users. Moreover, a knowledge source personalized for a target user may be extended or enhanced based on the knowledge sources personalized to similar users. Thus, where personal usage history for a new user is sparse or unknown, information from similar users, including for example, information about entity, entity-relationship pairs, intents, or entity popularity, may be used for training a session context model for the new user.

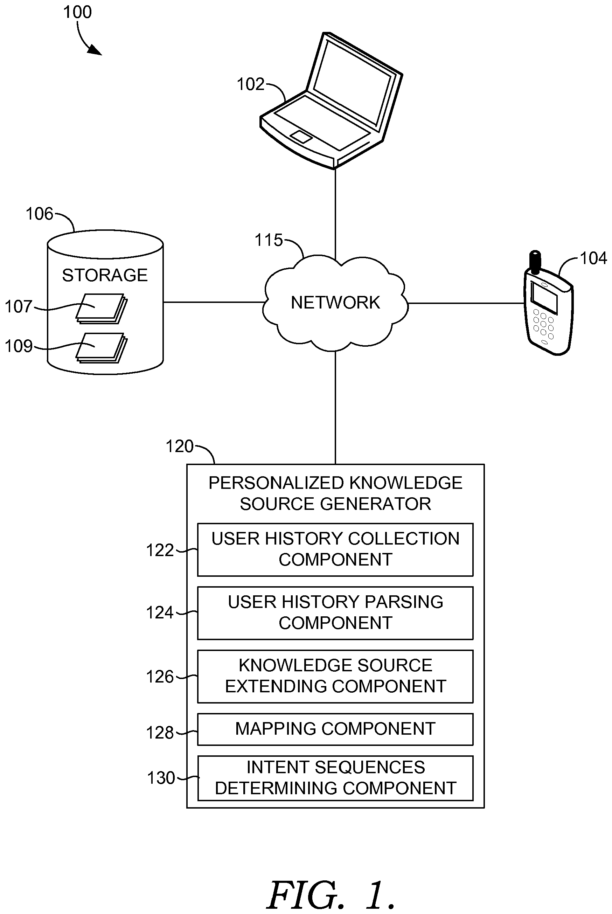

Turning now to FIG. 1, a block diagram is provided showing aspects of an example system architecture suitable for implementing an embodiment of the invention and designated generally as system 100. It should be understood that this and other arrangements described herein are set forth only as examples. Thus, system 100 represents only one example of suitable computing system architectures. Other arrangements and elements (e.g., user devices, data stores, etc.) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, some functions may be carried out by a processor executing instructions stored in memory.

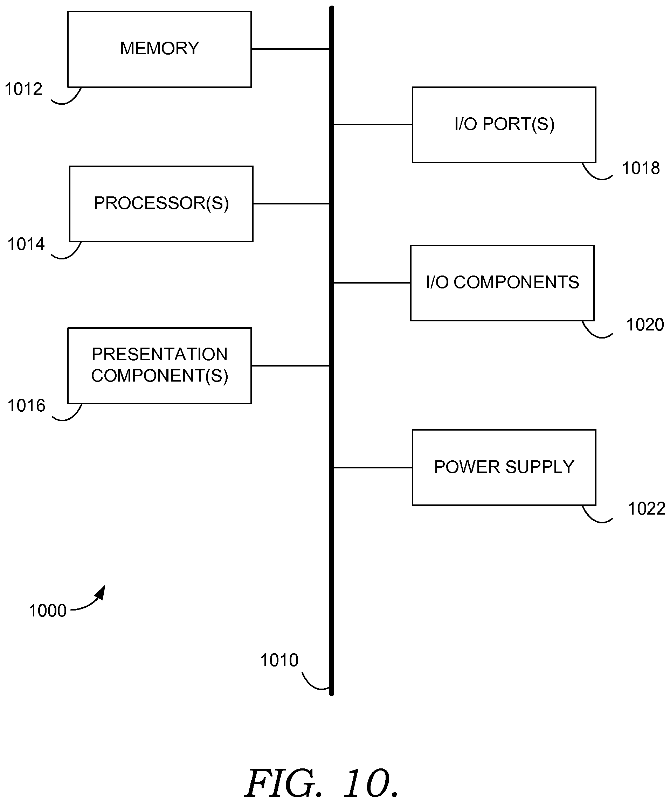

Among other components not shown, system 100 includes network 115 communicatively coupled to one or more user devices (e.g., items 102 and 104), storage 106, and a personalized knowledge source generator 120. The components shown in FIG. 1 may be implemented using one or more computing devices, such as computing device 1000 described in connection to FIG. 10. Network 115 may include, without limitation, one or more local area networks (LANs) and/or wide area networks (WANs). Such networking environments are commonplace in offices, enterprise-wide computer networks, intranets, and the Internet. It should be understood that any number of user devices, storage components, and personalized knowledge source generators may be employed within the system 100 within the scope of the present invention. Each may comprise a single device or multiple devices cooperating in a distributed environment. For instance, the personalized knowledge source generator 120 may be provided via multiple devices arranged in a distributed environment that collectively provide the functionality described herein. Additionally, other components not shown may also be included within the network environment. For example, a knowledge graph data store may also be provided to separately store knowledge graphs that can easily be accessed by the embodiments described herein.

Example user devices 102 and 104 each comprise any type of user device capable of receiving input from a user, such as described below. Although FIG. 1 shows two example user devices 102 and 104, a user may be associated with only one user device or more than two devices. In some embodiments, a user device receiving input from a user is associated with user identification for the user.

In one embodiment, user devices 102 and 104 may be the type of computing device described in relation to FIG. 10 herein. By way of example and not limitation, a user device may be embodied as a personal data assistant (PDA), mobile device, laptop, tablet, remote control, entertainment system, vehicle computer system, embedded system controller, appliance, consumer electronic device, or other electronics device capable of receiving input from a user. The input may be received by one of many different modalities, such as by way of example and not limitation, voice or sound, text, touch, click, gestures, the physical surroundings of the user, or other input technologies described in connection to FIG. 10. For instance, a user may utilize a search engine in a session to input one or more queries, intending to receive information highly relevant to the queries. Or, a user may interact with one or more social networking websites and provide input that the user intends to share with friends or even strangers. The user may also interact with the social networking websites indicating that the user has read and likes another user's posting. Still yet, a user may use voice commands with a gaming system, television, etc. All of these forms of input, as well as others not specifically mentioned herein, are contemplated to be within the scope of the present invention.

Storage 106 generally stores one or more knowledge sources 107 and personal sources 109 that are used, in one embodiment, to build session context models for adapting language models to improve speech recognition, such as to accurately determine the possibility of the user's next utterance. In some embodiments, the one or more models (not shown), including models built from knowledge sources 107 and/or models build from knowledge sources 107 and personal sources 109 are also stored in storage 106. Further, although depicted as a single data store component, storage 106 may be embodied as one or more data stores, or may be in the cloud.

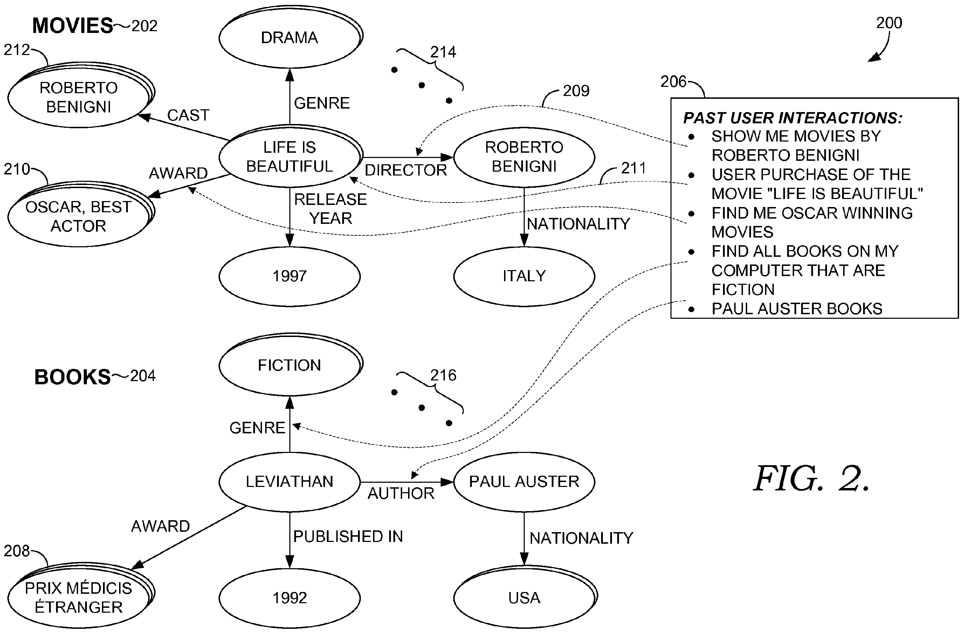

Knowledge sources 107 include, in one embodiment, relational databases including domain databases, knowledge bases, knowledge graphs, or similar information sources. In one embodiment, knowledge sources 107 comprise a structured semantic knowledge base such as the Semantic Web. By way of background, the Semantic Web (or similar structured knowledge bases or web-scale semantic graphs) can be represented using the Resource Description Framework (RDF), which is a triple-based structure of association that typically includes two entities linked by some relation and is similar to the well-known predicate/argument structure. An example would be "directed_by *(Avatar,* James Cameron)." As RDFs have increased in use and popularity, triple stores (referred to as knowledge bases or knowledge graphs) covering various domains have emerged, such as Freebase.org. In one embodiment, knowledge sources 107 include one or more knowledge graphs (or relational graphs), which include sets of triples indicating a relation between two entities (e.g., *Avatar* - directed by - James Cameron), and which may be compiled into a graph structure. An example knowledge graph is provided in FIG. 2, which illustrates exemplary entities and their relationships, and will be discussed in greater detail herein.

In one instance, the knowledge source identifies at least one entity. As used herein, the term entity is broadly defined to include any type of item, including a concept or object, that has potential relationships with other items. For example, an entity might be the movie *"Life is Beautiful,"* the director "Roberto Benigni," or the award "Oscar." Collections of entities carrying similar syntactic or semantic meaning comprise entity types (e.g. movie titles, songs, time expressions etc.). Furthermore, related entity types can be organized into domains, which may be considered as a category of entities, such as movies, exercise, music, sports, businesses, products, organizations, etc. For instance, within the movie domain, the movie *"Life is Beautiful"* is directed by "Roberto Benigni," and the movie also won an Oscar.

Personal sources 109 include one or more sources of information for a user. By way of example and not limitation, such user information can include a user's query logs, including queries submitted, query results, and/or clicked-on results; websites visited and browser history; online purchase history; social networking interactions; and other user-interaction information or usage history. In one embodiment, user information includes actions taken on a user device (such as items 102 or 104), which may be correlated with a user ID.

Storage 106 may also store the personalized knowledge sources or extended personalized knowledge sources generated according to embodiments described herein. For example, as will be further described, a personalized knowledge source is customized for a particular user and may be used for determining a session context model for the user as well as for adapting a language model for improving speech recognition for that particular user. An extended personalized knowledge source is customized to a particular user but also includes mappings from other users having similar interests to the user associated with the personalized knowledge source. When we refer to mappings herein, we are referring to the process of taking data from one or more personal sources and aligning it or mapping it to a knowledge source.

In one embodiment, where the data includes a specific entity or entity-type, the entity or entity-type may be identified in a personalized knowledge source, such as a knowledge graph, and a count is added to that entity or entity-type. Thus, the personalized knowledge source becomes a probabilistic personalized knowledge source. For example, if the data includes the name of a movie *"Life is Beautiful,"* that movie name is located in the user's personalized knowledge graph and the current count of that entity is increased by one. Other methods of mapping are contemplated to be within the scope of embodiments of the invention as well. For instance, an algorithm may be used to provide or calculate a weight for each entity and/or entity-type. In such embodiments, the algorithm may use a one-to-one counting method or may take into account different factors, such as from which source the entity or entity-type was mentioned, how a user indicated an interest in that entity or entity-type, etc. In one embodiment, where a personalized knowledge source of a target user is extended, weighting from the personalized knowledge source may be used to scale the counts of certain N-grams coming from other users' queries, so that the target user's interests or intents are still represented.

Personalized knowledge source generator 120 comprises a user history collection component 122, a user history parsing component 124, a knowledge source extending component 126, a mapping component 128, and intent sequences determining component 130. In some embodiments, personalized knowledge source generator 120 may include fewer components, for example, a parsing component 124, a mapping component 128, and intent sequences determining component 130. As shown in the embodiment of FIG. 1, personalized knowledge source generator 120 is configured to generate personalized knowledge sources, extended personalized knowledge sources utilizing personal source data from a particular user or from other users determined to be similar to the particular user, and determine intent sequences of mapped user-interaction information, which may be used for an intent sequences model. In one embodiment, personal knowledge source generator 120 may be implemented on one or more user devices, such as user devices 102 and 104, on a server or backend component (not shown) or on a distributed platform (not shown) in the cloud.

At a high level, in one embodiment, a personalized knowledge source is created by mapping personal-source data to a generic (non-personalized) knowledge source, or a personalized knowledge source that can be further personalized. In particular, the user history collection component 122 is configured to extract or otherwise collect personalized user history for a particular user. This personalized user history may be collected from a variety of personal sources 109. In one embodiment, any source can be utilized as long as it can be tied to the particular user, such as a source requiring a user identification or otherwise associated with the particular user. Collecting data from such sources allows the system to capture personal interests and intents of the user, which can then be used to model session contexts and predict or determine the likelihood of unseen queries (e.g., voice queries) for use in personalized language modeling. Understanding the user's interests and intents therefore helps to predict what the user may be interested in or what the user may ask about in future queries.

In addition to user history associated with just a particular user, in some embodiments, user history collection component 122 is also responsible for collecting history with respect to other users similar to the particular user, such as other users with similar user history including their interests, intents, and/or intent sequences. In particular, where user history for a particular user is sparse or unknown, it may be helpful to bolster the user's personalized knowledge source with data from other users who share interests, intents, or intent sequences similar to that particular user. By way of example and not limitation, it may be determined that the particular user has a high level of interest in movies generally, and frequently searches the web for cast information for various movies. Additionally, the user history for this user indicates that the user tends to purchase movies on occasion. Therefore, where a different user or a group of users are determined to have similar interests in movies, searching for casts of movies, and tending also to purchase the movies, data from the different user's or group of users' history may be mapped to the personalized knowledge source associated with the particular user in order to bolster the usefulness of the personalized knowledge source for speech recognition. Likewise, where a different user or group of users are determined to have similar intent sequences, data from the different user's or group of users' history may be mapped to the personalized knowledge source associated with the particular user.

The user history parsing component 124 is generally configured to parse through the likely large amounts of data extracted or collected by the user history collection component 122 to identify any entity-related or user-action-related information including user-interaction events. User interactions or actions, as used herein, refer to an action taken by the user that can provide information as to the user's intent and the user's interest level associated with a particular entity and/or entity-type. A user-interaction event refers to a specific user interaction. For instance, to continue with the example above, if the user is interested in movies and tends to make occasional movie purchases over a website, the action of making movie purchases can be identified, parsed, and mapped to the user's personal knowledge source.

User-action-related information can be particularly helpful for extending a user's personalized knowledge graph using data from other users because the actions can be used to determine whether the other users have interests or intents similar to those of the particular user. Another exemplary user action includes the user providing an indication that he or she "likes" some item (e.g., public figure, celebrity, book, movie, posting by another user) on a social networking site, for example. In some embodiments, the entities associated with whatever the user has "liked" can be identified by the user history parsing component 124.

In addition to parsing personalized user history associated with the particular user, in some embodiments, user history parsing component 124 is also responsible for parsing data associated with other users with interests and/or intents similar to a particular user, as described herein. In such embodiments, the parsed data associated with the other users may then be mapped to the particular user's personalized knowledge graph.

Knowledge source extending component 126 is configured to determine whether a particular user's personalized knowledge source should be extended and, in some embodiments, how it may be extended and to what extent. In one embodiment, where a user's personalized knowledge source is not heavily populated with mappings of information from the user's history, for example, if the counts or weights of entities in the knowledge source are not particularly high or have not met a threshold, it may be determined that the user's personalized knowledge source should be extended. Knowledge source extending component 126 may also be responsible for determining how the personal knowledge source should be extended. One aspect of this determination can include identifying other users or groups of users that are similar to the particular user. In one embodiment, the similar users may share population characteristics such as interest in a specific domain, types of queries performed (e.g., searching for cast members of movies), user actions (e.g., purchasing movies), intent sequences (or patterns, including intent-type sequences), etc.

In one embodiment, extending a personal knowledge source involves weighting entities and the entity-to-entity relationships in a target user's personalized knowledge source. The weighting may be based on a number of times that specific entities and relationships have been mapped from user history data. A similar weighting may be applied with respect to personalized knowledge sources of the other users. If the entities and entity-to-entity relationships in a specific portion of the target user's personalized knowledge source are of a similar weight (e.g., meet a minimum threshold of weighted values) to the same entities and entity-to-entity relationships in the same portion of the other users' personalized knowledge sources, it may be determined that the particular user and the other users have a similar interest in the subject matter of that portion of the knowledge graph.

In another embodiment, a popularity of entities in a knowledge source is utilized instead of or in addition to a count of how many times an entity has been mapped. For example, where a specific entity has a particularly high popularity (e.g., it is frequently queried, mentioned, posted about on social networking sites) for a group of other users, it can be predicted that the particular user also has an interest in that popular entity. Accordingly, the particular user's personalized knowledge source may be extended in regards to that entity, and may include an indication that the particular user is (or has a likelihood of being) interested in the portion of the personalized knowledge source for that entity.

In yet another embodiment, the user's personalized knowledge source may be used to determine a level of interest of the user in a first portion of the personalized knowledge source, such as a particular entity or entity-to-entity relationship. For example, determining a level of interest may comprise determining whether the user has met a certain threshold indicating a likelihood that the user (or other users) is interested in some portion of the knowledge source. Alternatively or in addition, there may be multiple levels of interest that can be met to quantify a user's interest in a portion of the knowledge source.

Mapping component 128 of personalized knowledge source generator 120 is configured to map data to a knowledge source. As described herein, the user history parsing component 124 generally identifies and extracts user history data such as entities and user actions from the personal sources. This data is then mapped to the knowledge source, thereby tailoring or personalizing the knowledge source to the user. The mapping of this data can occur in a number of ways. For example, as described above, each time a particular entity or entity-type is identified in a user's personal history information, the count of that entity or entity-type in the knowledge source can be increased, such that, at any particular time, an entity or entity-type has a count associated therewith. Thus, if an entity has been mapped ten times, the count associated with the entity in the personalized knowledge source may be 10. Or alternatively, in one embodiment, an algorithm may be used to calculate a weight for each entity, rather than a one-to-one count. The algorithm may consider other factors, such as where and/or how the entity (or entity-type) is mentioned or otherwise linked to the user or the context, for example. Accordingly, as used herein, the terms "mapping," "mapped to," or "aligned" are used broadly to mean increasing a count of, weighting, or creating an association with an entity, relation, entity-entity pair or entity-type in a knowledge source or other indicator for representing a user's interest in a specific portion of a knowledge source based on user history information.

Intent sequences determining component 130 is configured to determine sequences or patterns of user intents (including domains). As used herein the term intent sequences comprises a series or pattern of one or more user intents or intent types, which may be represented by one or more domains.

In some embodiments, it can be assumed that users often will have interactions with conversational systems in line of their general intents to achieve a task (e.g., arranging activities for a Friday night). Thus users are likely to follow similar sequences of intents or intent types in the specific session. For different users, the arguments of the intents might differ, however they may share similar sequences of intent types (for example, first making a reservation for dinner, then checking movie times or bars with live music, sending an email to the friends to share plan details, etc.). Accordingly, by capturing users' higher level intent sequences, such as by mapping sequences or patterns of user-interaction information, which may be received from their session logs, then models, such as intent sequence models, can be created that anticipate similar intents but with different arguments (for example, arguments such as specific entities or specific relations that did not appear in the session logs or other usage history information).

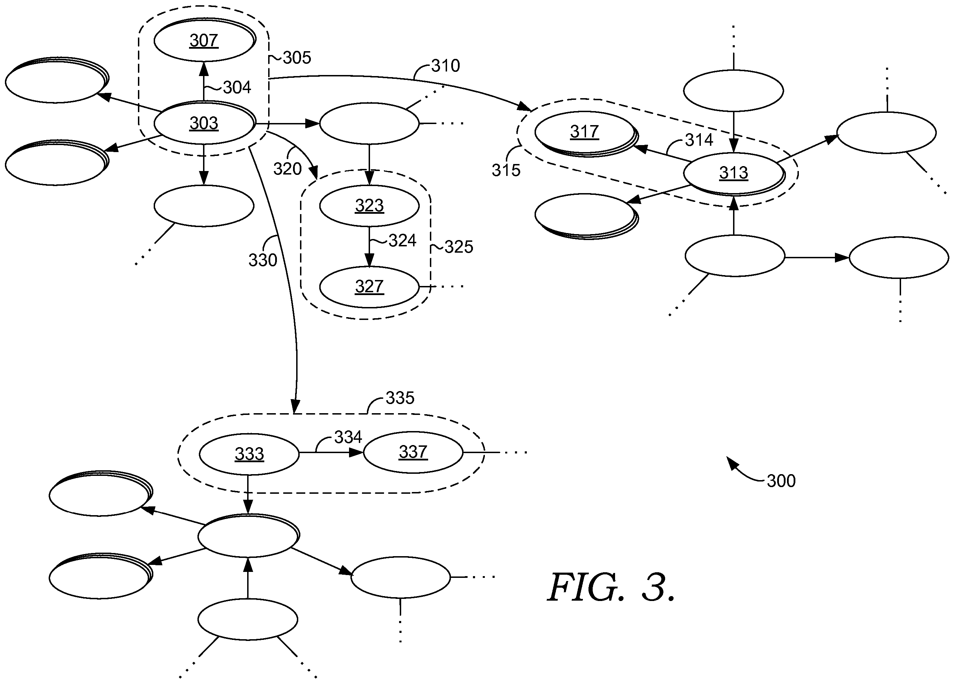

In an embodiment, the intent sequences are determined based on sequences or patterns of user interactions within user session information present in the data mapped to the knowledge source. As described previously, data mapped to the knowledge source may include user-interaction information such as user-interaction events from one or more sessions between a user and an application device. From the mapping performed by mapping component 128, the likely user intents associated with each mapped user-interaction event may be determined. In an embodiment, the likely user intents are determined based on the semantic relationships (such as the one or more entities, entity types, or relationships) and/or other information in the knowledge source corresponding to the mapped user-interaction information, such as the domain of that sub-space of the knowledge source. Thus a sequence or pattern of user intents may be determined based on a sequence or pattern of mapped user interactions. In one embodiment the sequences or patterns of intents are used by component 130 to generate an intent sequences model, which includes statics for intent or domain transitions in the sequence or pattern. For instance, the statistics may comprise a set of intent transition probabilities, which represent the probability of the next user intent (or subsequent user intents), given one or more preceding intents, in one embodiment. Moreover, as further described in connection to FIG. 3, the transition probabilities of the intent sequence model may be used to build or adapt the personalized language models or SLU models, including real time generation and interpolation of the language and SLU models, thereby forming a session context model.

Turning now to FIG. 2, aspects of a personalized knowledge source are depicted, in accordance with embodiments of the invention. By way of example, the personalized knowledge source of FIG. 2 comprises a personalized knowledge graph and is referred to generally as knowledge graph 200. Knowledge graph 200 represents one example of a knowledge source that may be personalized to a particular user. In particular, as described below, FIG. 2 illustrates an example of aligning user history information (in this case, past user utterances) to knowledge graph 200, and weighting the relations on the graph according to personal usage statistics from the user history.

A knowledge graph may be divided into multiple parts, with each part referred to as a sub-graph. Two sub-graphs of example knowledge graph 200 are shown in FIG. 2: a portion corresponding to movies domain 202 and a portion corresponding to a books domain 204. For the sake of clarity, movies domain 202 and books domain 204 each show only a subset of the entities and entity-to-entity relationships in the domain. Specifically, movies domain 202 is shown centered around the movie entity *"Life is Beautiful"* and books domain 204 is shown centered around the book entity *"Leviathan."* As the three dots (items 214 and 216) indicate, other sub-parts of the knowledge graph (e.g., other movies, other books) are present but are not shown.

Also shown in FIG. 2 is box 206 of user history information. In this example, the user history information includes past user interactions such as a previous query submitted by the user asking for movies by Roberto Benigni. Here, the entity "Roberto Benigni" and the entity relation "director" are identified from the user utterance and mapped (arrow 209) to knowledge graph 200. A second example shows a user action, indicating that the user has purchased a copy of the movie *"Life is Beautiful."* Arrow 211 shows how this user action is aligned to the *"Life is Beautiful"* entity in the knowledge graph 200. Similarly, box 206 shows examples of other user queries, which may come from one or more query logs associated with the user. These queries include, for example, asking for Oscar winning movies. Here, "Oscar" can be identified as an entity and mapped to the "Oscar, Best Actor" entity 210 in the knowledge graph and/or, as shown here, to the entity-entity relationship of "award" connected to the "Oscar, Best Actor" entity 210, because the user's intent is to identify movies that have been awarded an Oscar. The next example represents a query from a desktop (or user device) query log that includes past queries from the user conducted on a user device. Here, the user was searching for books saved locally on his or her user device that are fiction. Thus, "fiction" is recognized as an entity and may be mapped to the fiction entity and/or to the entity relationship "genre" connected to fiction, since the user's intent was to find books that are fiction.

Lastly, an example user interaction event is provided of the user submitting a query for "Paul Auster books." As shown, the entity "Paul Auster" may be mapped to the user's personalized knowledge graph as an entity or as a relationship between the book (entity) *"Leviathan"* having the author (entity) of "Paul Auster." In this way, by mapping the example user history information provided in box 206 to the knowledge graph 200, the knowledge graph 200 becomes personalized to the user.

As further shown in FIG. 2, some entities, such as "Prix Medicis Etranger" 208, "Roberto Benigni" 212, and "Oscar, Best Actor" 210 may be determined to be of higher interest to this particular user, as indicated by oval shapes placed below the entity (e.g., representing a count) each time a mapping occurs to that entity. Alternatively, counts or weights associated with certain entities, entity-entity pairs, or relations can provide another indication (such as an associated value) that a user is interested in those entities, entity-entity pairs, or relations.

With reference to FIG. 3, an example showing one aspect of a session context model based on a personalized knowledge graph 300 is provided. FIG. 3 depicts three sub-graphs of the personalized knowledge graph 300, with each sub-graph including various entities and entity-relations (for example the pair of entities 313 and 317 related according to arrow 314) such as those described in connection to FIG. 2. FIG. 3 also depicts a first portion 305 of the knowledge graph, showing a semantic relationship 304 between entities 303 and 307, and a set of second portions 315, 325, and 335of the knowledge graph showing semantic relationships 314, 324, and 334 between entities 313 and 317, 323 and 327, and 333 and 337, respectively.

Each portion 305, 315, 325, and 335 corresponds to the mapping of a user interaction event from mapped user history information and represents a semantic relationship on the knowledge graph. From each mapping, a likely user intent associated with the mapped user-interaction event may be determined based on the semantic relationship(s), such as one or more entities, entity type(s), or relationship(s), and/or based on other information that may be present in the knowledge source corresponding to the location of the mapped event. Thus, each portion 305, 315, 325, and 335 also corresponds to a likely user intent for the mapped user-interaction information.

As described in connection to FIG. 1, in some embodiments of the invention, a sequence of intents may be determined (such as by an intent sequence determining component 130) based on sequences or patterns of user-interaction information within user session information present in the data mapped to the personalized knowledge source. Accordingly, first portion 305 of knowledge graph 300 corresponds to a first intent based on a first user-interaction event (mapped to the knowledge source) and portions 315, 325, and 335 each correspond to a second intent (thereby forming a set of second intents) based on a second user-interaction event occurring subsequent to the first user interaction event in a session. Arrows 310, 320, and 330 indicate the transitions from the first intent (corresponding to portion 305) to the set of second intents (portions 315, 325, and 335, respectively) and may represented as a probability or likelihood that a particular second intent (e.g. the second intent corresponding to portion 335) follows the first intent (corresponding to portion 305). The set of transitions 310, 320, and 330 thus represents a set of intent transition probabilities between the first intent and a second intent and may be used for an intent sequence model.

For example, suppose user history information includes a query log that has one or more sessions of user-submitted queries between a user and a personal assistant application operating on a mobile device, with each session including a sequence of queries. Suppose ten of the sessions include a user submitted query asking about the director of a movie (e.g., "Who is the director *of Life is Beautiful*?"). Suppose that in three of these ten sessions, the next user-submitted query asked about the nationality of the movie director; in five of these ten sessions, the next user-submitted query asked about the cast of the movie; and in two of these ten sessions, the next user-submitted query asked awards that the movie received. Using example personalized knowledge source 300, a set of intent transition probabilities may be determined, based on these sequences of queries. In particular, portion 305 corresponds to a first intent based on a first user-interaction event (the user submitted query related to the director of a movie - i.e. "Who is the director of *Life is Beautiful*?"). Portions 315, 325, and 335, each correspond to a second intent based on a second user interaction occurring subsequent to the first user interaction event in a session. Here, let portions 315, 325, and 335 correspond to the subsequently submitted queries about the director's nationality, the cast, and awards, respectively. Therefore the transition probabilities associated with arrows 310, 320, and 330 may be determined as 0.3 (i.e. in three out of ten sessions, the next query was about the director's nationality), 0.5 (i.e. the next query was about the cast five times out of the ten sessions), and 0.2 (the next query was about awards in two out of the 10 sessions). These transition probabilities (0.5, 0.3, and 0.2) may be used for an intent sequences model. (In this instance, for the sake of clarity, the model would comprise only two intents in the sequence: a first intent corresponding to the query about a director-movie and a second intent corresponding to a second query about either director-nationality, movie-cast, or movie-awards.) For this intent sequences model, where a first intent is related to movie-director, there is a 0.3 probability that the next intent will be the director's nationality, a 0.5 probability that the next intent will be related to the cast, and a 0.2 probability that the next intent will be related to awards. In some embodiments, the intent sequences model represents transitions from entity-to-entity pairs to other entity-to-entity pairs (as shown in FIG. 3), from relations to other relations, or from intents/domain to other intents/domain.

Based on the intent sequences model, language models or SLU models may be interpolated as needed, thereby forming session context models. For example, suppose for a given knowledge source, the weights corresponding to the entities and entity relationships are the same (i.e. equal distributions). (Such a distribution may be unlikely, but is provided for the purposes of explanation.) Thus a language model that is based on this knowledge source would have equal probabilities for all possible next utterances, based on a previous utterance. Suppose now the knowledge source is personalized with user-interaction information, as described above, to determine an intent sequences model. Now, the weights may be adjusted based on the transition probabilities associated with this intent sequences model. Thus the probabilities of possible next utterances are altered based on the previous utterance or utterances, thereby forming a session context model. The weights may be adjusted by any means known in the art. For example, in some embodiments, the weights may be adjusted by averaging, such as averaging the initial value and the values of the corresponding intent transition probabilities. In some embodiments the weights may be adjusted by decrementing or incrementing the values based on a decreased or increased corresponding intent transition probabilities, respectively.

In some embodiments, the session context model is generated in real time or as needed, as language models or SLU models are interpolated based on an intent sequence model. In some embodiments, the session context model is determined from the personalized knowledge source that has been modified (such as by adjusting the weighting at nodes or relations) to represent the transitions from entity-to-entity pairs to other entity-to-entity pairs, from relations to other relations, or from intents/domain to other intents/domain (i.e., the transition probabilities). The session context model also may be embodied as a set of intent transition probabilities associated with a knowledge source, such that for a given entity or semantic relationship identified from a first turn, a likely second turn (or set of likely second turns) may be determined with the session context model based on the intent transition probabilities and the weighting associated with the particular entity or semantic relationship in the knowledge source. In some embodiments the session context model may be embodied as a table associated with a knowledge graph, as part of a relational database representing the knowledge source, or a set of probabilities associated with semantic relationships, for example.

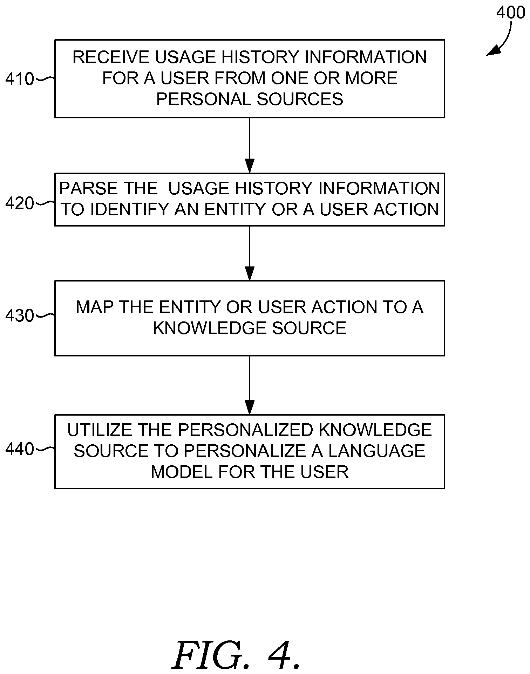

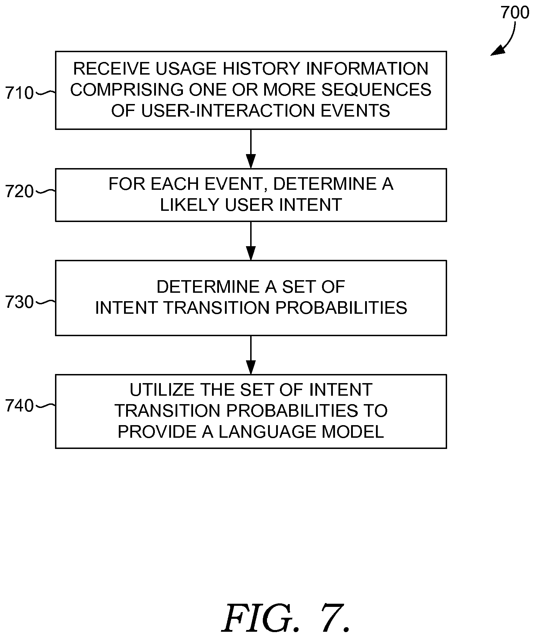

FIGS. 4-9 provide a set of flow diagrams are illustrating example method embodiments of the invention. In particular, FIGS. 4-6 are directed to methods for personalizing knowledge source for a particular user or set of users, based on usage history, which may include user-interaction information. FIGS. 7-9 are directed to methods of incorporating session context information, such as data from a sequence or pattern of user interactions, into a knowledge source (or using a knowledge source personalized with session context information) for session context modeling. It is contemplated that any of the processes described in the embodiments for personalizing a knowledge source discussed in connection to FIGS. 4-6 may be applied to the methods of incorporating session context information discussed in connection to FIGS. 7-9.

Turning now to FIG. 4, a flow diagram is provided illustrating one exemplary method 400 for personalizing a knowledge source for a particular target user based on user history information. The personalized knowledge source created according to method 400 may be used to personalize a language models for speech recognition of the target user, such as by predicting future unseen queries (e.g., voice queries) submitted by the user. The personalized knowledge source also may be used to create an intent sequence model by determining sequences (or patterns) of entities and entity pairs corresponding to sequences or patterns of user-interaction information from the user history. Statistics associated with intent transitions in the intent sequences model then may be used to adjust the weighting of the personalized language models, thereby creating a session context model.

Accordingly, at a high level, embodiments of method 400 first create a personalized knowledge source using various personal sources of information for the target user as well as available knowledge sources, which may include non-personalized knowledge sources or knowledge sources capable of being personalized to the target user. Information extracted from past utterances, user interactions, and other personal sources of user history information is aligned with the knowledge source. For example, entity-based similarity of users' past utterances to portions of the knowledge graph may be identified and mapped onto those portions. The entities and entity-types that appear in the user history may be tracked and their counts used when building personalized language models. One embodiment further includes using targeted spoken language understanding models for application domains to estimate a probability of a particular domain, given a past user utterance (or other user datum) and/or the probability of the user's intent and a particular relation, given the past user utterance.

*P*(*domain* |*past user utterance*), *P(intent* & *relation* |*past user utterance*) The probabilities can be used to boost counts of specific parts of the knowledge source when building personalized language models, such as shown in FIG. 2.

Continuing with FIG. 4, at step 410 usage history information for a target user is received from one or more personal sources. Usage history includes data correlated with a target user that is collected from one or more personal sources, such as personal sources 109 described in connection to FIG. 1; for example, past user queries from query logs, website interactions, user actions, etc., performed by the target user via a user device. User intent may be inferred from the past behavior, which is represented by the usage history.

In one embodiment, usage history is collected and stored in a data store, such as storage 106 of FIG. 1. For example, where a target user is logged on to a user device, an application running on the device, or a specific website or online service, such as a search engine, information about usage history can be gathered and associated with the user. In one embodiment, addresses or pointers to the usage history information may be stored so that the usage history may be received and specific information may be parsed from the usage history in a next step.

At step 420, usage history information is parsed to identify one or more entities and/or user actions, which may be part of a sequence or pattern of user interactions, such as user-submitted queries, utterances, or user actions, for example. In one embodiment, step 420 includes extracting the entities, including entity-entity pairs and entity relations, and/or user actions from the usage history information associated with the target user. In one embodiment, the parsed usage history information identifies one or more sequences of user interaction events.

At step 430, the parsed data, such as entity or user action related information from a user interaction event is mapped onto a knowledge source, thereby creating a personalized knowledge source and indicating portions of the knowledge source of most interest to the target user. Thus, personal interests and intents of the user, as represented by the usage history, are captured onto the personalized knowledge source and may then be used for personalized language modeling, such as predicting future unseen queries (e.g., voice queries). For example, user utterances or past interactions of the target user may be aligned onto a knowledge graph, such as described in connection to FIG. 2.

In one embodiment, step 430 comprises adapting existing language models, which may be represented by the knowledge source, to usage history of the target user, such as past utterances. Assuming users usually have requests for the conversational systems in line with their general interests, they may repeat requests from similar domains, and with similar intents, but where the arguments of the intent differ. Accordingly, by capturing the user's higher level interests and intents including, in some embodiments, sequences of intents, language models can be created that anticipate similar intents, but with different arguments (i.e., arguments that do not appear in the usage history). By incorporating intent sequence information, the language models are adapted to session contexts and thus made more accurate. As described above, in one embodiment, this is achieved by identifying entity-based similarities of usage history with portions of the knowledge source and mapping them onto the corresponding portion of the knowledge source. Thus, the entities and entity-types that appear in the user history are tracked and their counts used when building personalized language models. In some embodiments, the personalized knowledge source determined in this step represents a probabilistic knowledge source because usage statistics from the user history were utilized to weight (or add counts to) the relations and entities of the knowledge source.

At step 440, the personalized knowledge source may be utilized to personalize (or train) a language model for the target user. At a high level, an embodiment of step 440 may comprise integrating the personalized probabilistic knowledge source into a personalized language model, such as by training a language model (e.g., N-gram) from queries corresponding to entities or entity-entity pairs that were identified in the usage history. A language model may be further trained for the target user by first training the model for the target user's queries and then interpolating it with the queries for the same entity or entity-entity pairs coming from all users. Alternatively, a language model for all users, such as a universal language model (ULM), may be trained for the target user's knowledge source space. In both cases, weights from the target user's knowledge source may be used to scale the counts of certain N-grams coming from other users' queries so that target user's interests or intents are still represented.

In some embodiments, the personalized knowledge source is utilized to determine a set of intent transition probabilities, by determining sequences or patterns of the mapped entity or user action information, from which user intent may be inferred. The transition probabilities may be used to adjust the weights (or counts) of the relations and entities of the knowledge source, thereby creating a session context model. In this way, personalized language models based on the knowledge sources are adapted to model session context.

In one embodiment of method 400, personalized knowledge graphs associated with other users are analyzed. From these personalized knowledge graphs, one or more of these other users may be identified as having interests and/or intents similar to the target user, such as by having commonly mapped entities and entity-to-entity relationships to those of the target user. In this way, entities and/or user actions associated with the other similar users may be mapped onto the target user's personalized knowledge graph. This augments the personalized knowledge graph of the target user so that the user's personalized language model is better suited to improve speech recognition. In one embodiment, similarity in interest and/or intent between two users or a group of users may be determined by comparing two probabilistic knowledge graph spaces associated with each user or group, where each space is represented with a probabilistic graph. Using this similarity metric, the interpolation weights may be evaluated to determine which weights will be used to interpolate a target user's personalized knowledge source with similar users' or user groups' sources.

Some embodiments of method 400 include utilizing social network interactions or other user inputs at similar networks for language model personalization by collecting, parsing, and mapping these interactions onto a knowledge source as described above. In some embodiments, the knowledge source is already personalized to a target user and may be further personalized or expanded by mapping social network interaction. In such embodiments or in embodiments where a target user's personalized knowledge source is expanded based on similarity with other users, the language models for the other similar users or social networking friends can be used to interpolate the target user's personalized language model. The new personalized language model then may be used to predict future queries of the target user, assuming that social networking friends will introduce some influence on future queries by a target user.

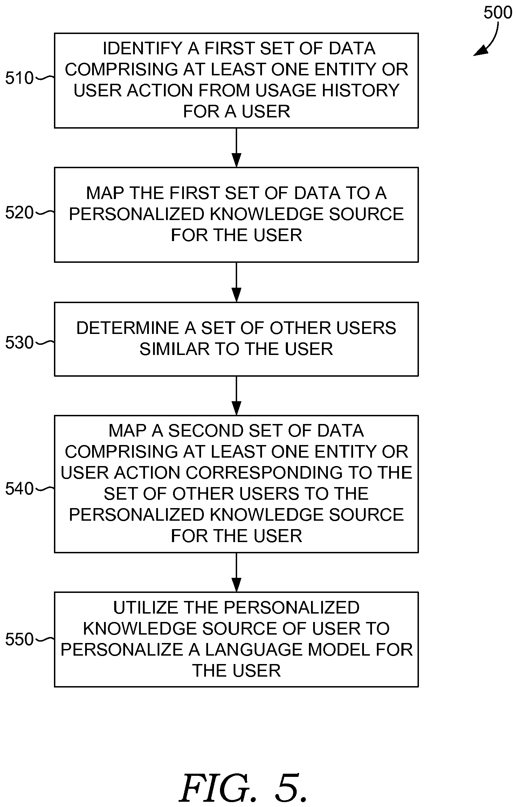

With reference now to FIG. 5, a flow diagram is provided illustrating an exemplary method 500 for personalizing a knowledge source for a particular target user based on user history information and information from similar users. The personalized knowledge source may be used to personalize language models for speech recognition of the target user, such as by predicting future unseen queries submitted by the target user. The personalized knowledge source also may be used to create session context model, as described herein.

At a high level, embodiments of method 500 may be used to "extend" a knowledge source personalized to a target user by incorporating information from knowledge sources personalized to similar users and/or social networking friends. One way a personalized knowledge graph may be extended is by using known personal relations. An example relation may include triplets like "works at <company>" or "is father of <contact>." Then sub-graphs of the web-scale knowledge graph, as activated by the previous usage history, may be augmented to this extended personal knowledge graph. In such embodiments, nodes and edges (e.g., entities and entity-to-entity relationships of a knowledge graph) are weighted with respect to the usage history so that language model training can benefit immediately. These weights may then determine the weight of the N-gram used to activate that part of the graph. Further, once a user has an extended personalized knowledge source, personalized knowledge sources of other users may be used to enhance the target user's knowledge source. For example, the target user's language model may be adapted using the language model of other users with prior weight based on contact frequency.

Similarly, a personalized knowledge source may be extended by utilizing knowledge sources of other users similar to the target user. For example, assuming each user has a personalized language model, which may be provided by a probabilistic personalized knowledge source determined based on their usage history and metadata, such as described in connection to FIG. 4, then language models may be created for different user-population characteristics. In one embodiment, similar users may be identified by clustering language models corresponding to the personalized knowledge sources of the users. Any of a number of various techniques for clustering, known by those skilled in the art, may be applied. In one embodiment, bottom-up clustering is applied, in which a pair of language models which are most similar to each other with respect to some metric are merged iteratively (combined with equal weights, in one embodiment). A symmetric Kullback Leibler distance, which is typically used to compute distance between two probability distributions, or a similar metric may be used. In another embodiment, K-Means clustering is applied, where the candidate language models are first separated into N bins for N number of clusters. A language model is computed using linear interpolation of the language models inside it. Each language model is then moved to the bin which is the most similar, again using some distance or similarity metric.

As a complementary approach, in some embodiments, in addition to lexical information, graph similarity based clustering methods can be used to cluster personalized knowledge graphs in order to identify groups of users with similar interests or intents. These embodiments, which may rely on action patterns of users, result in semantically clustered users. In one embodiment, methods for clustering database entries, such as latent semantic indexing (LSI), may be used. In some cases, where the knowledge source is a knowledge graph, the graph can be flattened into relation tables of semantic triples (relation/entity pairs, such as "Cameron-director-Avatar"). In these embodiments, instead of clustering graph entries, users are clustered based on their usage of the triples by simple table transformation. Once clusters are determined, they may be used to provide smoother language models because the models may be trained with greater numbers of similar data.

Continuing with FIG. 5, at step 510, a first set of data comprising at least one entity or at least one user action is identified from the usage history of a target user. The at least one entity may include one or more entities, entity-entity pairs, or entity relations corresponding to a knowledge source. In some embodiments, usage history, from one or more personal sources of information for the target user, is analyzed to identify the first set of data, and in some embodiments, the first set of data is parsed from the usage history as described in step 420 of FIG. 4.

At step 520, the first set of data is mapped to a personalized knowledge source for the target user. In an embodiment, the knowledge source comprises a generic (non-personalized) knowledge source that becomes personalized upon mapping the first set of data. Alternatively, in another embodiment, the first set of data is mapped onto a knowledge source that is already personalized to the target user, such as a personalized knowledge source created in accordance with method 400 of FIG. 4. In embodiments, the first set of data, which comprises at least one entity or user action, may be mapped as described in step 430 of FIG. 4.

At step 530, a set of users similar to the target user is determined. In one embodiment, one or more similar users are determined by clustering, such as described above. In one embodiment, step 530 includes weighting entities and the entity-to-entity relationships in a target user's personalized knowledge source. The weighting may be based on a number of times that specific entities and relationships have been mapped from user history data. A similar weighting may be applied with respect to personalized knowledge sources of the other users. If the entities and entity-to-entity relationships in a specific portion of the target user's personalized knowledge source are of a similar weight (e.g., meet a minimum threshold of weighted values) to the same entities and entity-to-entity relationships in the same portion of the other users' personalized knowledge sources, it may be determined that the target user and the other users have a similar interest in the subject matter of that portion of the knowledge graph.

In another embodiment, a popularity of entities in a knowledge source is utilized instead of a count of how many times an entity has been mapped. For example, if a specific entity has a particularly high popularity (e.g., it is frequently queried, mentioned, posted about on social networking sites) for a group of the target user's social networking friends, then there may be an increased likelihood the target user also has an interest in that popular entity. Accordingly, the target user's personalized knowledge source may be extended (as described in step 540) in regards to that entity, and may include an indication that the particular user is (or has a likelihood of being) interested in the portion of the personalized knowledge source for that entity.

In another embodiment, a level of interest of the target user and the other users is determined utilizing the target user's personalized knowledge source and the personalized knowledge sources of the other users. For instance, a level of interest may be compared in a first portion of the respective knowledge sources to determine if there are similar or overlapping interests between users. In one instance, it can be determined whether the determined level of interest meets a minimum threshold and also that the group of other users has a comparable level of interest in the first portion of the knowledge source to the target user's level of interest. While in one embodiment there is one threshold used to determine users' levels of interest, in a different embodiment, more than one threshold is used so that, for example, there may be a low level of interest threshold, a medium level of interest threshold, a high level of interest threshold, etc. The users that comprise the set of users who share similar interests to those of the target user, in one embodiment, have common interests to one another. Other methods for determining user similarity not specifically disclosed herein are contemplated to be within the scope of the invention.

At step 540, a second set of data corresponding to the set of users similar to the target user is mapped to the personalized knowledge source of the target user, thereby extending the target user's personalized knowledge source. The second set of data comprises at least one entity (including an entity-entity pair or entity relation) or user action. In some embodiments, the second set of data is identified and extracted from the personalized knowledge sources of similar users. In one embodiment, the second set of data includes the entity information and/or related metadata that is more frequently occurring in the personalized knowledge sources of the set of similar users, which may be determined by a threshold. At step 550, the personalized knowledge source for the target user, which has been extended, is utilized to personalize (or train) a language model for the target user. Embodiments of step 450 are similar to embodiments described in connection to step 440 of method 400 (FIG. 4).

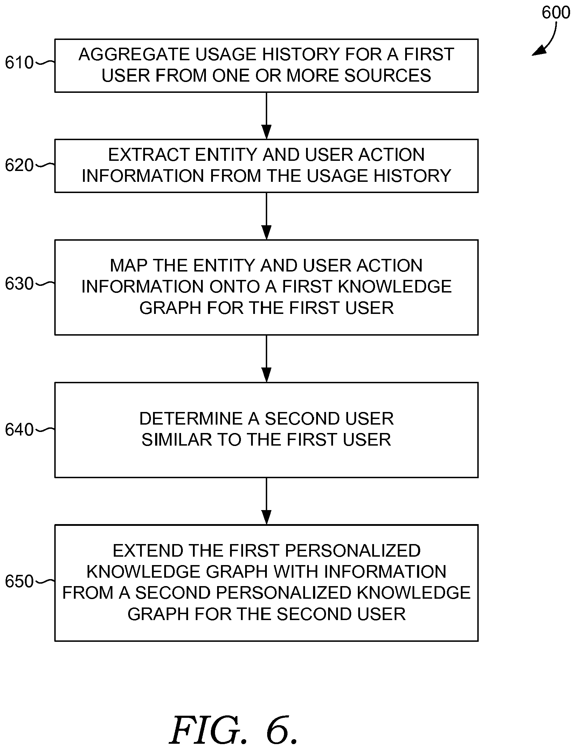

Turning to FIG. 6, a flow diagram is provided illustrating an exemplary method 500 for extending a knowledge graph personalized for a target user. The extended personalized knowledge graph may be used to personalize a language model for the target user. The personalized language model may be used for speech recognition of the target user, such as by predicting future unseen queries submitted by the target user.

At step 610, usage history, from one or more personal sources associated with a first user, is aggregated. Usage history includes data correlated with the first user from one or more personal sources, such as personal sources 109 described in connection to FIG. 1. For example, past user queries from query logs, website interactions, user actions, etc., performed by the first user via a user device.

At step 620, entity and user action information are extracted from the first user's aggregated usage history. The entity and user action information may include one or more entities, entity-entity pairs, entity relations, or user action related information. In one embodiment, the entity and user action information are parsed from the aggregated usage history as described in step 420 of method 400 (FIG. 4).

At step 630, the entity and user action information extracted in step 620 are mapped onto a first knowledge graph associated with the first user, thereby personalizing the first knowledge graph for the user. In one embodiment, the mapping operation performed in step 630 is similar to the mapping operation described at step 430 of method 400 (FIG. 4), where the knowledge source is a knowledge graph.

At step 640, a second user similar to the first user is determined. In one embodiment, step 640 comprises identifying a second user similar to the first user by determining that a personalized knowledge graph for the second user is similar to the personalized knowledge graph of the first user. In one embodiment, the second user is from a set of similar users determined by clustering or other ways as described in step 530 of method 500 (FIG. 5). As described previously, based on the determined similarity between the first and second user, it can be predicted that the first and second user have a likelihood of sharing similar interests and intents.

At step 650, the first user's personalized knowledge graph is extended to include information from a personalized knowledge graph associated with the second (similar) user determined in step 640. In an embodiment, step 650 comprises mapping entity or user action information from the second user's personalized knowledge graph onto the first user's personalized knowledge graph. Some embodiments of step 650 are similar to embodiments described in connection to step 540 of method 500 (FIG. 5), where the knowledge source is a knowledge graph. In one embodiment, the second personalized knowledge graph is more developed (includes more information) than the first personalized knowledge graph prior to extending the first graph. In some embodiments of method 600, the extended personalized knowledge graph may be used to personalize a language model and/or session context model for the first user, such as described at step 550 of method 500 (FIG. 5).

Turning to FIG. 7, a flow diagram is provided illustrating an exemplary method 700 for adapting a language model to a session context based on user history. At a high level, in one embodiment, method 700 incorporates session context information, such as sequences (or patterns) of user-interactions from user-session logs into a knowledge source. Based on the sequences of interactions, a sequence of higher level intents or intent types corresponding to the interactions may be determined with a set of transition statistics representing a likelihood that a particular subsequently occurring intent, will happen given a specific preceding intent. Based on the statistics, weights corresponding to entities and entity relations in the knowledge source may be interpolated, thereby creating a session context model. From the session context model, one or more language models may be provided based on the now interpolated weights of knowledge source, in an embodiment.

At step 710, usage history information is received from one or more personal sources. The usage history information includes one or more sequences or patterns of user-interaction events. In an embodiment, the usage history information includes multimodal data, and may be received from one or more session logs. In an embodiment, the usage history information may be parsed (such as described in step 420 of FIG. 4) to determine the one or more sequences or patterns of user-interaction events.

At step 720, for each event in the one or more sequences of user-interaction events, a likely user intent corresponding to the event is determined. In an embodiment, step 720 comprises mapping the event to a knowledge source, such as described in step 430 (FIG. 4), and determining the intent based on semantic relationship(s) or other information associated with the portion of the knowledge source at the mapping. In an embodiment, intent may be inferred based on the entity and relation information, including the entity type(s) and relation types, or other semantic relationship information associated with the portion of the knowledge source at the mapping. In an embodiment, the intent may be determined only for a subset of the interaction events, such as interaction events in sequences or having specific entities or entity-relations or interest or in common with a target user, for example. In an embodiment, where the knowledge source does not have an entity or entity-relationship corresponding to a user-interaction event to be mapped, it may be added (or in the case of a knowledge graph entity node(s) and relation edge(s) may be created); for example, based on entities or entity-relations identified in the usage history information associated with the event. For example, if a user turn asks about the director of a newly released movie that is not yet incorporated into a knowledge source, a director-movie semantic relationship may be inferred, and an entity corresponding to the movie and a "director" relation associated with the movie may be added to the knowledge source.

At step 730, based on intent determined for each user interaction event in the one or more sequences, a set of intent transition probabilities is determined. In an embodiment, a transition probability represents a likelihood that a particular intent will occur subsequent to a proceeding intent. In an embodiment of step 730, one or more high level intent sequences may be determined based on the one or more sequences of user-interaction events, wherein each intent in an intent sequence corresponds to an event in a user-interaction event sequence. From these one or more sequences of intents, a set of intent transition probabilities may be determined based on the probability of a specific intent occurring after a given intent. For example, a transition probability might indicate the likelihood that in the next turn the user will ask about the cast of a movie, given that in the preceding turn, the user has ask about a specific director of a specific movie.

In an embodiment, the set of intent transition probabilities comprises an intent sequence model comprising a relationship of at least two intents and a probability of the second intent given the first intent. The intent sequence model may be used, in some embodiments, to interpolate language models for use in recognizing the next turn of a user session, such as the next query spoken by the user. In an embodiment, weighting associated with a portion of a knowledge source corresponding to a transitioned-to intent (the second intent in the relationship of at least two intents) may be adjusted based at least in part on the transition probability.

At step 740, the set of intent transition probabilities are utilized to provide a language model. In an embodiment language models are interpolated as needed based on the intent transition probabilities and previously received user turn(s). In an embodiment, the set of intent transition probabilities may be used to determine or modify weights associated with entity or entity relation on a knowledge source, thereby personalizing (or further personalizing) the knowledge source and forming a session context model. The session context model then may be used for creating one or more language models as needed, based on one or more previous user utterances or interactions. In some embodiments, the language model is provided from a personalized knowledge source such as described in step 440 (FIG. 4).

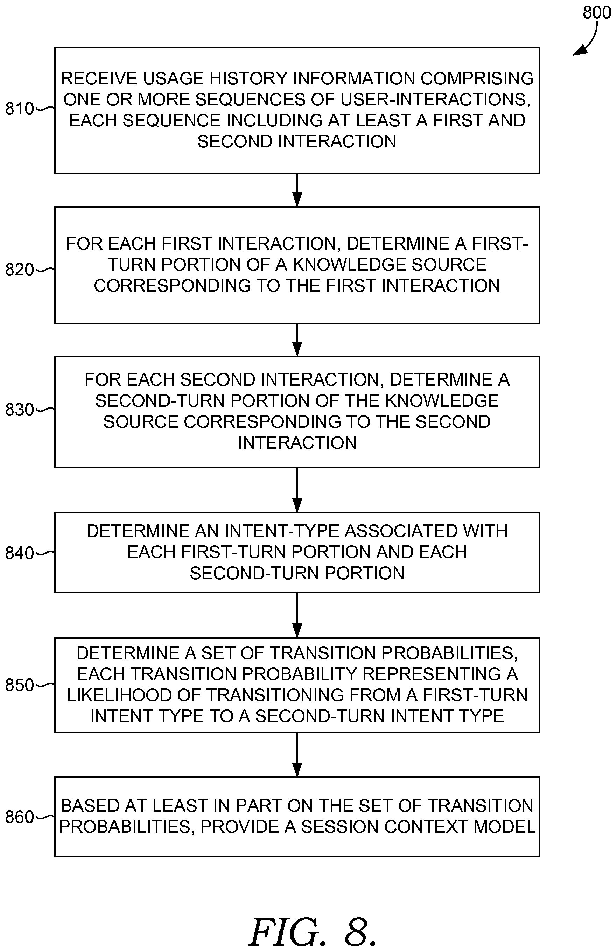

With reference now to FIG. 8, a flow diagram is provided illustrating an exemplary method 800 for providing a session context model based on user history information for use in speech recognition or spoken language understanding. The session content model may be used to provide one or more language models (or SLU models) used for recognizing (or understanding) a second turn spoken by a user, given a first turn already received from the user. For example at a high level and in one embodiment, upon receiving a first spoken user interaction (a first turn), a portion of the knowledge source (referred to in this example as a "first-turn portion") is determined corresponding to entities and entity-relations identified in the first turn. Based on a set of transition probabilities associated with that specific first-turn portion of the knowledge source, one or more likely second-turn portions of the knowledge source may be determined, wherein the second turn portions correspond to likely next turns (next spoken user interactions) to be received from a user. A language model (or SLU model) then may be provided based on each of these likely second-turn portions or a subset of the second-turn portions (such as the most likely second-turn portions). Each of these provided language models (or SLU models) is based on weights or distributions associated with the entities and/or entity-relations at the second-turn portion, in an embodiment. Further, these weights used by the models may be interpolated based on the transition probability of transitioning to that particular second-turn portion from the first-turn portion of the knowledge source.

In other words, the session context model may be used to generate specific language models as needed based on the likely next turn to be received by the user, given a preceding turn or turns. Thus, by way of example, suppose it is highly likely (i.e. a high transition probability) that, given a user first asking about a movie-director in a first turn, then the user will next ask (in a second turn) either about the movie cast or movie awards. Upon the user first asking "Who is the director of *Life Is Beautiful,"* a first language model may be generated and provided for recognizing the next (subsequent) turn that may be received from the user, wherein the user is expected to ask about the cast of *Life Is Beautiful.* (For example, this first language model can be adapted to more accurately recognize a subsequent user utterance such as "Did he also star in the movie?" where "he" refers to Robert Benigni, the director, since the user has just ask about who is the director). Similarly, upon the user first asking "Who is the director of *Life Is Beautiful,"* a second language model may be generated and provided for recognizing a next (subsequent) turn that may be received from the user, wherein the user is expected to ask about the awards received by *Life Is Beautiful.* (For example, this second language model can be adapted to more accurately recognize a subsequent user utterance such as "Was it nominated for an Oscar?" where "it" refers to *Life Is Beautiful,* the movie, since the user has just ask about who is the director of *Life Is Beautiful,* and "Oscar" is an award.)

Continuing with FIG. 8, at step 810, usage history information is received comprising one or more sequences of user interactions. In an embodiment, the usage history is received from one or more personal sources such as a user session log, and may comprise multimodal information. The one or more sequences of user interactions include information about at least a first user interaction and a second user interaction; for example a first user-submitted query or turn and a second query (or second turn) subsequently submitted by the user. In an embodiment, the second interaction is the next interaction to occur (immediately subsequent) after the first interaction. In an embodiment, the usage history information may be parsed (such as described in step 420 of FIG. 4) to determine the one or more sequences or user interactions.

At step 820, for each first user interaction in the one or more sequences of user interactions, a first-turn portion of a knowledge source corresponding to the first interaction is determined, thereby forming a set of first-turn portions of the knowledge source. For example, in an embodiment a portion of the knowledge source corresponding to a user interaction may be determined by mapping the user interaction (or usage history information associated with the user interaction) to the knowledge source, such as described in step 430 (FIG. 4). Based on the mapping, the portion(s) of the knowledge source relevant to or corresponding to the user interaction (i.e., the portion of the knowledge source that the interaction is mapped to) may be determined.

At step 830, a similar determination is performed for the second user interaction. In particular, at step 830, for each second user interaction in the one or more sequences of user interactions, a second-turn portion of a knowledge source corresponding to the second interaction is determined, thereby forming a set of second-turn portions of the knowledge source. Various embodiment of step 830 are similar to the embodiments described in step 820. In one embodiment, steps 820 and 830 further comprise determining a weighting of each first-turn and second-turn portions based on the number of first and second user-interactions corresponding to the first-turn and second-turn portions, respectively. In one embodiment weights or distributions associated with entities or entity relations that are included in each portion of the knowledge source are set or modified based on the number of first and second user interactions corresponding to the first-turn and second-turn portions, respectively.

At step 840, an intent type associated with each first-turn portion is determined thereby forming a set of first-turn intent types, and an intent type associated with each second-turn portion is determined thereby forming a set of second-turn intent types. In an embodiment, an intent type is a user intent or a higher level intent that corresponds to an action taken by a user, such as a user interaction. In an embodiment, intent types associated with each first-turn and second-turn portions may be determined based on entity and relation information in the respective portions of the knowledge source, as described in step 720 of method 700 (FIG. 7).

At step 850, a set of transition probabilities is determined, each transition probability representing the likelihood that a particular second-turn intent type will occur given a specific first-turn intent type. In one embodiment a transition probability represents a likelihood that the second-turn intent type will occur in the turn or user interaction immediately following the first-turn intent type. For example, in an embodiment a transition probability might represent the probability that a user will next ask who stars in *Life is Beautiful* (thus the second-turn intent type is about movie-cast) after asking about the director of *Life is Beautiful* (thus the first-turn intent type is movie-directed-by). In one embodiment, the set of transition probabilities comprises an intent sequence model such as described in step 730 of method 700 (FIG. 7), which may be used, in some embodiments, to interpolate language models for use in recognizing the next turn of a user session, such as the next query spoken by the user.

In an embodiment, weighting associated with the second-turn portion of the knowledge graph may be adjusted based at least in part on a transition probability from a first-turn portion of the knowledge source to that second-turn portion. Accordingly at step 860, one or more language models (or SLU models) are provided based at least in part on the set of transition probabilities. For example and as described previously, in one embodiment, upon receiving a first spoken user interaction (first turn), a first-turn portion of the knowledge source may be determined corresponding to entities and entity-relations identified in the first turn. Based on the set of transition probabilities associated with that specific first-turn portion of the knowledge source (as determined based on the one or more sequences from the usage history in the preceding steps of method 800), the likely second-turn portions of the knowledge source may be determined, wherein these second-turn portions correspond to the likely next turns (next spoken user interactions) expected to be received from a user. Based on this, language models (SLU models) then may be provided for each of the likely second-turn portions using the weights associated with the entities and/or entity-relations at the specific second-turn portion. Further, the weights used by the models may be interpolated based on the transition probability of transitioning to that particular second-turn portion from the first-turn portion of the knowledge source. (In other words, specific language models may be generated as needed based on the likely next turn to be received by the user, given a preceding turn or turns.)

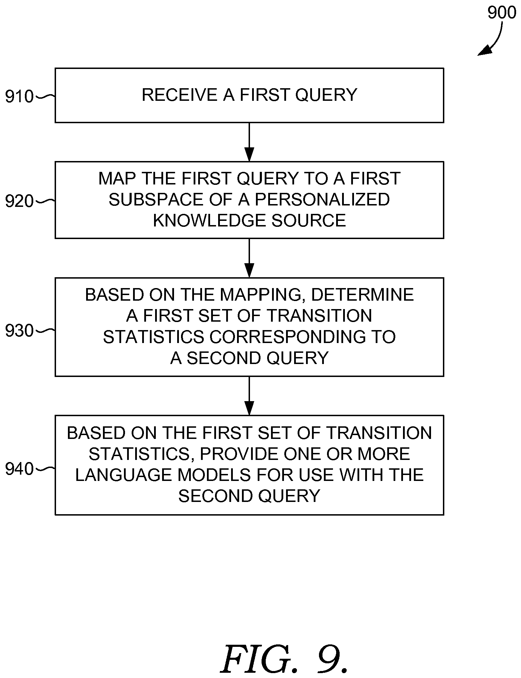

Turning to FIG. 9, a flow diagram is provided illustrating an exemplary method 900 for using a knowledge source personalized with session context information to provide a language model (or SLU model) adapted to the session context. The language model or SLU model may be used to more accurately recognize or understand a next utterance (next turn) received from a user. Embodiments of method 900 use a knowledge source that has been personalized with session context information. The knowledge source may be personalized according to the embodiments described in connection to FIGS 4-8.

In one embodiment, once a knowledge source is personalized (such as by mapping session logs to entities or entity-entity pairs in a knowledge graph), statistics may be collected about switching from one intent to another intent, or from one domain to another domain. The statistics may be represented in the knowledge source as additional transitions; for example, a probability of a user staying in one genre of music search vs. switching to another genre, or domain. Accordingly, when a user starts speaking to their personal device (or other human-machine conversational system), after couple of turns, some embodiments of method 900 first identify the corresponding sub-spaces (i.e. portions) in the knowledge source. Then the transition probabilities associated with these subspaces may be used as transition weights (that represent relations or intent/domain changes), which may be used as interpolation weights for language models representing other subspaces that are under consideration (i.e. those subspaces likely to be transitioned to in the next turn.) For example, in a first turn a user utters "What time is the Giants game tonight?" An embodiment of the invention detects "Giants" as an entity, maps this to a knowledge source (or creates an entry for this entity in the knowledge source, if not present), and boosts the probability or weight associated with that subspace (i.e. the portion of the knowledge source), indicating that the user is interested in concepts or actions around this entity (Giants) in the knowledge source. Based on the subspace, all possible transitions (or just the likely transitions) from the Giants entity are calculated. Language models corresponding to these transitions are then interpolated on-the fly.

Continuing this example, suppose there is a 0.8 probability that the next turn will transition to a particular player (for instance, the user will next ask about Sergio Romo) and a 0.2 probability that the next turn will transition to team jerseys (for instance, the user will next ask "how much is a Giant's jersey?"). Two language models based on the two subspaces corresponding to Sergio Romo and Giant's jersey or (Giant's-related merchandise) may be provided and used to more accurately determine the next utterance from the user, such that the weights or distributions of each language model are interpolated based on the transition probabilities. (In this instance, one of the language models is interpolated with 0.8 and the other language model with 0.2.)

Suppose further that in the second turn, the user asks "How did Sergio Romo play?" (Thus the user asked one of the two likely next turns discussed in the preceding paragraph.) Here, an embodiment of the invention detects the player name as an entity, maps this to a knowledge source (or creates an entry for this entity in the knowledge source, if not present), and boosts the probability or weight associated with that subspace indicating that the user is interested in concepts or actions around this entity (Sergio Romo) in the knowledge source. Based on the subspace and based on previous turns and intents/domains, such as the sports-team subspace (Giants) from first turn, all possible transitions (or just the likely transitions) from the present subspace (the subspace corresponding to Sergio Romo) are calculated. Language models corresponding to these new transitions are then interpolated and used to more accurately recognize a next utterance (a third turn) received from the user.

Continuing with FIG. 9, at step 910, a first query is received. The query may be received from a user engaged in a session with a user device, such as devices 102 and 104 of FIG. 1, or human-machine conversational system. In an embodiment, the first query is provided by the user as a spoken query or other utterance.

At step 920, the first query is mapped to a first subspace (or portion) of a knowledge source personalized with session context information. In an embodiment, the personalized knowledge source includes a plurality of subspaces that are related to other subspaces, such that each set of related subspaces (or "related subspace set") comprises at least a first subspace, one or more second subspaces corresponding to next turns or user interactions, and a transition statistic associated with each second subspace representing a likelihood that the particular second subspace is transitioned to from the first subspace in the related subspace set. Thus, upon mapping the first query to a first portion or subspace one or more second subspaces that are likely to be transitioned to from the first subspace may be determined as well as one or more transition statistics associated with each second subspaces (as described in step 930). In an embodiment, the transition statistics are determined based on historical information incorporated into the personalized knowledge space and corresponding to sequences of user-interactions. In an embodiment, a related subspace set includes a relationship of a first entity-entity pair to a second entity-entity pair, a first entity relation to second entity-relation, a first intent(s)/domain to second intent(s)/domain, or a first entity-pair/relation/intent(s)/domain to a second entity-pair/relation/intent(s)/domain. In an embodiment, the query may be mapped as described in step 430 of method 400 (FIG. 4).

At step 930, based on the mapping determined in step 920, a first set of transition statistics are determined that correspond to a future query (a second query) likely to be received from the user. In an embodiment, the first set of transition statistics comprise the transition statistics associated with each of the one or more second subspaces that may be transitioned to from the first subspace. In an embodiment, the transition statistics comprise a set of transition probabilities and are determined such as described in step 850 of method 800 (FIG. 8) or step 730 of method 700 (FIG. 7).

At step 940, based on the set of transition statistics, one or more language models (or SLU models) are provided for use with a second query or interaction (second turn) expected to be received from a user. In an embodiment, the one or more language models are provided to more accurately determine a subsequent utterance from the user. In an embodiment, the weights or distributions of the language models are interpolated based on the set of transition statistics.

In one embodiment of method 900, the plurality of related subspace sets in the personalized knowledge source further comprises one or more third subspaces corresponding to third turns or user interactions, wherein the transition statistic also represents a likelihood that a particular third subspace is transitioned to from a particular second subspace, given a transition from a particular first subspace to the particular second subspace. Additionally, in one embodiment, a second query is received and mapped to the personalized knowledge source, such as described in steps 910 and 920. Based on the mapping of the first and second queries, the embodiment determines a second set of transition statistics that correspond to a future query (a third query) likely to be received form the user. Further, based on the second set of transition statistics, one or more language models are provided for use with a third query or interaction (third turn) expected to be received from a user. In an embodiment, these "third-turn language models" may be provided as described in step 940.

Accordingly, we have described various aspects of technology directed to systems and methods for improving language models and SLU models, which may be used for speech recognition and conversational understanding systems by personalizing the knowledge sources utilized by the models to include session context information.

It is understood that various features, sub-combinations and modifications of the embodiments described herein are of utility and may be employed in other embodiments without reference to other features or sub-combinations. Moreover, the order and sequences of steps shown in the example methods 400, 500, 600, 700, 800, and 900 are not meant to limit the scope of the present invention in any way, and in fact, the steps may occur in a variety of different sequences within embodiments hereof. Such variations and combinations thereof are also contemplated to be within the scope of embodiments of the invention. For example, as described previously, it is contemplated that any of the processes described in methods 400, 500, and 600 for personalizing a knowledge source may be used with methods 700, 800, and 900.

Having described various embodiments of the invention, an exemplary computing environment suitable for implementing embodiments of the invention is now described. With reference to FIG. 10, an exemplary computing device is provided and referred to generally as computing device 1000. The computing device 1000 is but one example of a suitable computing environment and is not intended to suggest any limitation as to the scope of use or functionality of the invention. Neither should the computing device 1000 be interpreted as having any dependency or requirement relating to any one or combination of components illustrated.

Embodiments of the invention may be described in the general context of computer code or machine-useable instructions, including computer-useable or computer-executable instructions, such as program modules, being executed by a computer or other machine, such as a personal data assistant, a smartphone, a tablet PC, or other handheld device. Generally, program modules, including routines, programs, objects, components, data structures, and the like, refer to code that performs particular tasks or implements particular abstract data types. Embodiments of the invention may be practiced in a variety of system configurations, including handheld devices, consumer electronics, general-purpose computers, more specialty computing devices, etc. Embodiments of the invention may also be practiced in distributed computing environments where tasks are performed by remote-processing devices that are linked through a communications network. In a distributed computing environment, program modules may be located in both local and remote computer storage media including memory storage devices.

With reference to FIG. 10, computing device 1000 includes a bus 1010 that directly or indirectly couples the following devices: memory 1012, one or more processors 1014, one or more presentation components 1016, one or more input/output (I/O) ports 1018, one or more I/O components 1020, and an illustrative power supply 1022. Bus 1010 represents what may be one or more busses (such as an address bus, data bus, or combination thereof). Although the various blocks of FIG. 10 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 10 is merely illustrative of an exemplary computing device that can be used in connection with one or more embodiments of the present invention. Distinction is not made between such categories as "workstation," "server," "laptop," "handheld device," etc., as all are contemplated within the scope of FIG. 10 and with reference to "computing device."

Computing device 1000 typically includes a variety of computer-readable media. Computer-readable media can be any available media that can be accessed by computing device 1000 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 1000. Computer storage media does not comprise signals per se. Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 1012 includes computer storage media in the form of volatile and/or nonvolatile memory. The memory may be removable, non-removable, or a combination thereof. Exemplary hardware devices include solid-state memory, hard drives, optical-disc drives, etc. Computing device 1000 includes one or more processors 1014 that read data from various entities such as memory 1012 or I/O components 1020. Presentation component(s) 1016 present data indications to a user or other device. Exemplary presentation components include a display device, speaker, printing component, vibrating component, and the like.

The I/O ports 1018 allow computing device 1000 to be logically coupled to other devices, including I/O components 1020, some of which may be built in. Illustrative components include a microphone, joystick, game pad, satellite dish, scanner, printer, communication component (e.g., network communication component, radio or wireless communications component, or the like), etc. The I/O components 1020 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 1000. The computing device 1000 may be equipped with depth cameras, such as stereoscopic camera systems, infrared camera systems, RGB camera systems, and combinations of these, for gesture detection and recognition. Additionally, the computing device 1000 may be equipped with accelerometers or gyroscopes that enable detection of motion. The output of the accelerometers or gyroscopes may be provided to the display of the computing device 600 to render immersive augmented reality or virtual reality.

Many different arrangements of the various components depicted, as well as components not shown, are possible without departing from the scope of the claims below. Embodiments of the present invention have been described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims.

Accordingly, in one aspect, an embodiment of the invention is directed to one or more computer-readable media having computer-executable instructions embodied thereon that, when executed by a computing system having a processor and memory, cause the computing system to perform a method for providing a language model adapted to a session context based on user history. The method includes receiving usage history information comprising one or more sequences of user-interaction events, and for each event in the one or more sequences, determining a likely user intent corresponding to the event. The method also includes, based on the likely user intents determined for each event, determining a set of intent transition probabilities; and utilizing the set of intent transition probabilities to provide a language model.

In another aspect, one or more computer-readable media having computer-executable instructions embodied thereon are provided that, when executed by a computing system having a processor and memory, cause the computing system to perform a method for providing a session context model based on user history information. The method includes receiving usage history information comprising information about one or more sequences of user interactions, each sequence including at least a first and second interaction, and for each first interaction in the one or more sequences, determining a first-turn portion of a knowledge source corresponding to the first interaction. The method also includes, for each second interaction in the one or more sequences, determining a second-turn portion of a knowledge source corresponding to the second interaction, thereby forming a set of second-turn portions; and determining an intent type associated with each first-turn portion and each second-turn portion, thereby forming a set of first-turn intent types and a set of second-turn intent types. The method further includes based on the sets of first-turn intent types and second-turn intent types and the one or more sequences of user interactions, determining a set of transition probabilities.

In some embodiments, the method further includes, based at least in part on the set of transition probabilities, determining a set of language models each corresponding to a second-turn portion in a subset of the set of second-turn portions, thereby forming a session context model. In some embodiments, the method further includes determining a weighting associated with at least one second-turn portion of the knowledge source, and providing a language model based on the weighting. In some embodiments, the method further includes, for each first-turn portion, determining a weighting of the first-turn portion based on the number of corresponding first interactions; and for each second-turn portion, determining a weighting of the second-turn portion based on the number of corresponding second interactions.

In yet another aspect, one or more computer-readable media having computer-executable instructions embodied thereon are provided that, when executed by a computing system having a processor and memory, cause the computing system to perform a method for providing a language model adapted to a session context. The method includes receiving a first query, mapping the first query to a first subspace of a personalized knowledge source, and determining a first set of transition statistics corresponding to a second query based on the mapping and the personalized knowledge source. The method also includes based on the first set of transition statistics, providing one or more language models for use with the second query.

In some embodiments, the personalized knowledge source includes a plurality of related subspace sets, each related subspace set comprising a first subspace, one or more second subspaces, each second subspace corresponding to a likely-second query, and a transition statistic associated with each second subspace representing a likelihood that the second subspace is transitioned to from the first subspace. Additionally, in some embodiments the related subspace set further comprises one or more third subspaces, each third subspace corresponding to a likely-third query, and wherein the transition statistic also represents a likelihood that a particular third subspace is transitioned to from a particular second subspace, given a transition from the first subspace to the particular second subspace. In some embodiments, the method further includes receiving the second query; mapping the second query to one of the one or more second subspaces of a personalized knowledge source; determining a second set of transition statistics corresponding to a third query based on the mapping and the personalized knowledge source; and based on the second set of transition statistics, providing one or more third-turn language models for use with the third query.

## Claims

1. One or more computer-readable media having computer-executable instructions embodied thereon that, when executed by a computing system having a processor and memory, cause the computing system to perform a method for providing a language model adapted to a session context based on user history, the method comprising:
receiving usage history information comprising one or more sequences of user-interaction events;
for each event in the one or more sequences, determining a likely user intent corresponding to the event;
based on the likely user intents determined for each event, determining a set of intent transition probabilities; and
utilizing the set of intent transition probabilities to generate a language model personalized for the user.

2. The one or more computer-readable media of claim 1, wherein the usage history information comprises one or more user session logs.

3. The one or more computer-readable media of claim 1, wherein each transition probability in the set of transition probability represents a likelihood of transition from a first intent corresponding to a first event in a first sequence of the one or more sequences to a second intent corresponding to a second event in the first sequence in the one or more sequences.

4. The one or more computer-readable media of claim 1, wherein the provided language model is interpolated based at least in part on a subset of intent transition probabilities in the set of intent transition probabilities.

5. A computing system configured to perform the method recited in claim 1.

6. Computer program modules for executing the method recited in claim 1 on a computing system.

## Patentansprüche

1. Computerlesbares Medium oder mehrere computerlesbare Medien, auf denen computerausführbare Anweisungen realisiert sind, die, wenn sie durch ein Datenverarbeitungssystem ausgeführt werden, das einen Prozessor und Speicher aufweist, bewirken, dass das Datenverarbeitungssystem ein Verfahren zum Bereitstellen eines Sprachenmodells ausführt, das auf der Basis der Benutzerhistorie an einen Sitzungskontext angepasst ist, wobei das Verfahren Folgendes umfasst:
Empfangen von Benutzungshistorieninformationen, die eine oder mehrere Sequenzen von Benutzerinteraktionsereignissen umfassen;
für jedes Ereignis in der einen oder den mehreren Sequenzen Bestimmen einer wahrscheinlichen dem Ereignis entsprechenden Benutzerabsicht;
Bestimmen einer Menge von Absichtsübergangswahrscheinlichkeiten auf der Basis der für jedes Ereignis bestimmten wahrscheinlichen Benutzerabsichten; und
Benutzen der Menge von Absichtsübergangswahrscheinlichkeiten zur Erzeugung eines für den Benutzer personalisierten Sprachenmodells.

2. Computerlesbares Medium oder mehrere computerlesbare Medien nach Anspruch 1, wobei die Benutzungshistorieninformationen ein oder mehrere Benutzer-Sitzungs-Logs umfassen.

3. Computerlesbares Medium oder mehrere computerlesbare Medien nach Anspruch 1, wobei jede Übergangswahrscheinlichkeit in der Übergangswahrscheinlichkeitsmenge eine Plausibilität des Übergangs von einer einem ersten Ereignis in einer ersten Sequenz der einen oder mehreren Sequenzen entsprechenden ersten Absicht zu einer einem zweiten Ereignis in der ersten Sequenz in der einen oder den mehreren Sequenzen entsprechenden zweiten Absicht repräsentiert.

4. Computerlesbares Medium oder mehrere computerlesbare Medien nach Anspruch 1, wobei das bereitgestellte Sprachenmodell mindestens teilweise auf der Basis einer Teilmenge von Absichtsübergangswahrscheinlichkeiten in der Menge von Absichtsübergangswahrscheinlichkeiten interpoliert wird.

5. Datenverarbeitungssystem, das dafür ausgelegt ist, das Verfahren nach Anspruch 1 auszuführen.

6. Computerprogrammmodule zum Ausführen des Verfahrens nach Anspruch 1 auf einem Datenverarbeitungssystem.

## Revendications

1. Un ou plusieurs supports lisibles par ordinateur sur lesquels sont incorporées des instructions exécutables par ordinateur qui, lorsqu'elles sont exécutées par un système informatique disposant d'un processeur et d'une mémoire, amènent le système informatique à exécuter un procédé pour fournir un modèle de langage adapté à un contexte de session sur la base d'un historique d'utilisateur, le procédé comprenant les étapes suivantes :
recevoir des informations d'historique d'utilisation comprenant une ou plusieurs séquences d'événements d'interaction d'utilisateur ;
pour chaque événement des une ou plusieurs séquences, déterminer une intention probable de l'utilisateur correspondant à l'événement ;
sur la base des intentions probables de l'utilisateur déterminées pour chaque événement, déterminer un ensemble de probabilités de transition d'intention ; et
utiliser l'ensemble des probabilités de transition d'intention pour générer un modèle de langage personnalisé pour l'utilisateur.

2. Les un ou plusieurs supports lisibles par ordinateur selon la revendication 1, où les informations d'historique d'utilisation comprennent un ou plusieurs journaux de session d'utilisateur.

3. Les un ou plusieurs supports lisibles par ordinateur selon la revendication 1, où chaque probabilité de transition dans l'ensemble des probabilités de transition représente une probabilité de transition d'une première intention correspondant à un premier événement dans une première séquence des une ou plusieurs séquences vers une seconde intention correspondant à un second événement dans la première séquence des une ou plusieurs séquences.

4. Les un ou plusieurs supports lisibles par ordinateur selon la revendication 1, où le modèle de langage fourni est interpolé sur la base, au moins en partie, d'un sous-ensemble de probabilités de transition d'intention dans l'ensemble de probabilités de transition d'intention.

5. Système informatique configuré pour exécuter le procédé énoncé dans la revendication 1.

6. Modules de programme informatique destinés à exécuter le procédé énoncé dans la revendication 1 sur un système informatique.
